(19) Europäisches Patentamt

European Patent Office

Office européen des brevets

(11) **EP 1 319 944 A2**

(12) **EUROPEAN PATENT APPLICATION**

(43) Date of publication:
**18.06.2003 Bulletin 2003/25**

(51) Int Cl.[7]: **G01N 27/407**

(21) Application number: **02027775.2**

(22) Date of filing: **11.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **12.12.2001 JP 2001378973
30.09.2002 JP 2002286900**

(71) Applicant: **Denso Corporation
Kariya-city, Aichi-pref., 448-0029 (JP)**

(72) Inventors:
• **Emmei, Shoichiro
Kariya-city, Aichi-pref.,448-0029 (JP)**
• **Imamura Shinichiro
Kariya-city, Aichi-pref. , 448-0029 (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Solid electrolyte gas-sensing device**

(57) A gas-sensing device (1) is cooled down from 1470 °C to 457 °C after calcination when manufactured. The device comprises a solid electrolyte plate (11) made of partially stabilized zirconia, a measurement electrode (121) disposed on the plate to face an atmosphere of a gas to be measured, and a reference electrode (131) disposed on the plate to face an atmosphere of a reference gas. A gas-permeable diffusion layer (141) is laminated on the plate to cover the measurement electrode. A gas-non-permeable shield layer (142) is laminated on the diffusion layer. A reference-gas-chamber forming plate (15) is laminated on the solid electrolyte plate to form a reference gas chamber. One or more of the shield layer, diffusion layer, and reference-gas-chamber forming plate are made of a material that differs in a contraction percentage from the solid electrolyte plate by an amount of 0.3 % or less.

FIG. 1

EP 1 319 944 A2

**Description**

BACKGROUND OF THE INVENTION

(Field of the Invention)

The present invention relates to a gas-sensing device using a solid electrolyte plate, and in particular, to a gas-sensing device capable of detecting, for example, the density of a specific gas dissolved in the exhaust gas in order to control the combustion of an engine and others. Preferably, such a gas-sensing device is mounted to the exhaust system of an internal combustion engine.

(Description of the Related Art)

In general, an automobile engine has an exhaust system that includes a gas sensor used for controlling the combustion. Such a gas-sensing device is equipped with a solid electrolyte plate, a measurement electrode disposed on a first surface of the partially stabilized zirconia so as to face an atmosphere of a gas to be measured, and a reference electrode disposed on a second surface of the partially stabilized zirconia so as to face an atmosphere of a reference gas. A gas-permeable diffusion layer is laminated on the measurement electrode, while a gas-non-permeable shield layer is laminated on the diffusion layer. Further, a reference-gas-chamber forming plate is laminated on the second surface of the solid electrolyte plate so that a reference gas chamber is formed to face the reference electrode.

However, due to the fact that the solid electrolytic plate is located between the reference gas chamber and the chamber of a gas to be measured, the solid electrolyte plate tends to break or crack easily when manufactured. Particularly, during the cooling step that follows the calcination carried out after fabricating the gas-sensing device, the solid electrolyte plate has been apt to break or crack.

SUMMARY OF THE INVENTION

The present invention has been made to overcome the above problem. An object of the present invention is to provide a gas-sensing device that has resistance against defects of a solid electrolyte plate, such as breakage and cracks.

In order to achieve the foregoing object, as one aspect of the present invention, there is provided a gas-sensing device, which is subjected to a cooling step from 1470 °C to 457 °C after calcinating the gas-sensing device during production thereof. The gas-sensing device comprises a solid electrolyte plate made of partially stabilized zirconia; a measurement electrode disposed on a first surface of the solid electrolyte plate so as to face an atmosphere of a gas to be measured; a reference electrode disposed on a second surface of the solid electrolyte plate so as to face an atmosphere of a reference gas; a gas-permeable diffusion layer laminated on the first surface of the solid electrolyte plate so as to cover the measurement electrode; a gas-non-permeable shield layer laminated on the diffusion layer; and a reference-gas-chamber forming plate laminated on the second surface of the solid electrolyte plate so as to form a reference gas chamber to face the reference electrode. In this sensing device, at least one of the shield layer, the diffusion layer, and the reference-gas-chamber forming plate is made from a material that differs in a contraction percentage from the solid electrolyte plate by an amount of 0.3 % or less.

According to the foregoing configuration, the gas-sensing device is produced using green sheets. The green sheets are laminated one on another, and pressed to adhere mutually to form an un-calcinated lamination member. This un-calcinated lamination member is then heated for calcination. The lamination member that has been calcinated is then cooled down to the room temperature, during which the cooling step a difference between the contraction percentages of the components is significant.

In cases where a difference between the contraction percentages of the solid electrolyte plate and at least one of the shield layer, diffusion layer, and reference-gas-chamber forming plate is larger than 0.3 %, such difference is too large to prevent breakage or cracks of the solid electrolyte plate. That is, since a stress caused in the solid electrolyte plate becomes larger, there arises a possibility that the plate breaks or cracks.

In contrast, if such difference is 0 %, that is, the contraction percentages of all the solid electrolyte plate, shield layer, diffusion layer and reference-gas-chamber forming plate are equal one to another, there will be caused no stress on account of differences among those members. In that case, the solid electrolyte plate will highly resist against its breaking or cracks, thus providing the plate with the best suitable condition.

A temperature environment higher than 1470 °C exceeds a heat-resistant limit of the gas-sensing device, so that there is a possibility that the solid electrolyte plate, reference-gas-chamber forming plate, and others will deteriorate. It is therefore undesirable that the gas-sensing device is exposed to such a higher temperature atmosphere. With considering such conditions, there is no problem only when the gas-sensing device is composed of members whose differences of the contraction percentages is 0.3 % or less and is used at temperatures of 1470 °C or less.

Furthermore, a partially stabilized zirconia will cause its phase transition at a temperature of 457 °C, and its contraction percentage also changes at that temperature. Accordingly, in a temperature region lower than such a temperature that causes the phase transition, a difference between the contraction percentages of various types of ceramics and a solid electrolyte plate, both of which composes a gas-sensing device, remains smaller in most cases.

Hence, if the difference of the contraction percentages is kept at 0.3 % or less over the temperature range of 1470 °C to 457 °C, the present invention is able to provide sufficient advantages.

Preferably, as a second aspect of the present invention, at least one of the shield layer, the diffusion layer, and the reference-gas-chamber forming plate is made from a material that differs in a contraction percentage from the solid electrolyte plate by an amount of 0.1 % or less.

Such difference of 0.1 % or less is more reliable in reducing a stress caused in the solid electrolyte plate which is resultant from a difference of the contraction percentages. It is therefore possible to prevent or suppress cracks caused in the solid electrolyte plate during the cooling step.

As a third aspect of the present invention, it is also preferred that at least one of the shield layer, the diffusion layer, and the reference-gas-chamber forming plate is made of partially stabilized zirconia. A material produced by adding to zirconia a material, such as a several mol percents of MgO, CaO, rare earth oxide, has a cubic-system fluoric structure, thus providing stabilized zirconia that causes no phase transition. Partially stabilizing the structure will produce partially stabilized zirconia.

Like the solid electrolyte plate, when the components (1) to (6) listed below are made from the partially stabilized zirconia, resistance to a stress to be caused during the cooling step can be given to the components.

Furthermore, components made by mutually combining the listed components (1) to (6) can be made from the partially stabilized zirconia, so that resistance to a stress to be caused during the cooling step can be given to the combined components. The components (1) to (6) are listed as follows:

    (1) only the shield layer,
    (2) the shield and diffusion layers,
    (3) the shield, diffusion, reference-gas-chamber forming layers,
    (4) the shield and reference-gas-chamber forming layers,
    (5) only the diffusion layer, and
    (6) the diffusion and reference-gas-chamber plate.

In the present invention, the partially stabilized zirconia, made into both the solid electrolyte plate and shield layer, can be produced by adding yttria (yttrium oxide) to zirconia (zirconium oxide) by a volume of 4 to 7 mol percents.

The partially stabilized zirconia may be applied partially or entirely to the shield layer. In the same way, the partially stabilized zirconia may be applied partially or entirely to the reference-gas-chamber forming plate, diffusion layer, and solid electrolyte plate, respectively.

It is also preferred that the shield layer be made from the partially stabilized zirconia and coated with alumina-related insulation layer.

Because the partially stabilized zirconia is weak in resisting hot water, the shield layer is coated with the alumina-related insulation layer, which has a higher resistance to hot water. This coating structure prevents the shield layer from cracking due to the hot water.

The present invention can be applied to a variety of types of gas-sensing devices which is composed by laminating various kinds of ceramics layers and a solid electrolyte plate one on another. Such devices include an oxygen-sensing device, NOx-sensing device, HC-sensing device, and CO-sensing device. The present invention can also be reduced into practice in manufacturing a multiple type of sensing sensor capable of measuring density values of plural types of gases.

BRIEF DESCRIPTION OF THE DRAWINGS

In the accompanying drawings:

    Fig. 1 is a perspective view of a gas-sensing device according to an embodiment of the present invention, which is shown in a disassembled state;
    Fig. 2 is a perspective view of the gas-sensing device that has been assembled;
    Fig. 3 shows a cross section of an essential part of the gas-sensing device;
    Fig. 4 shows a cross section of an essential part of a gas-sensing device according to a modification of the embodiment, in which a reference-gas-chamber forming plate is modified;
    Fig. 5 is an illustration to show changes in contraction percentages of both partially stabilized zirconia and alumina during a cooling step of components fabricated as a gas-sensing device according to the present invention;

Fig. 6 explains a stress to be caused during the cooling step;

Fig. 7 is a graph showing the maximum stresses to be caused in specimens 1 to 4 and comparative specimens; and

Fig. 8 is a graph explaining defective fractions in a comparative manner.

## DETAILED DESCRIPTION OF PREFERRED EMBODIMENT

A preferred embodiment of the present invention will now be described with reference to accompanying drawings.

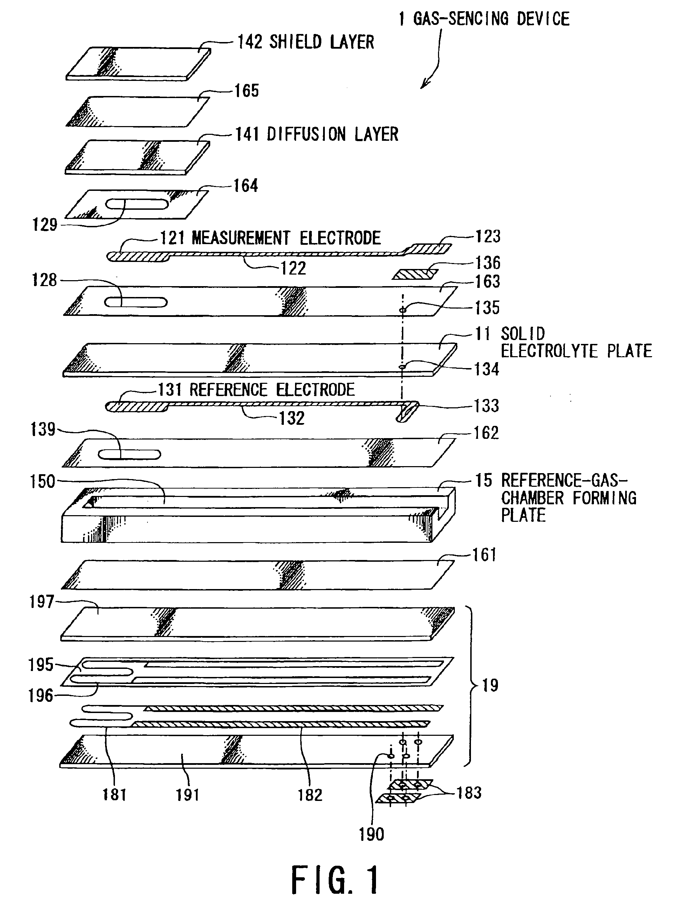

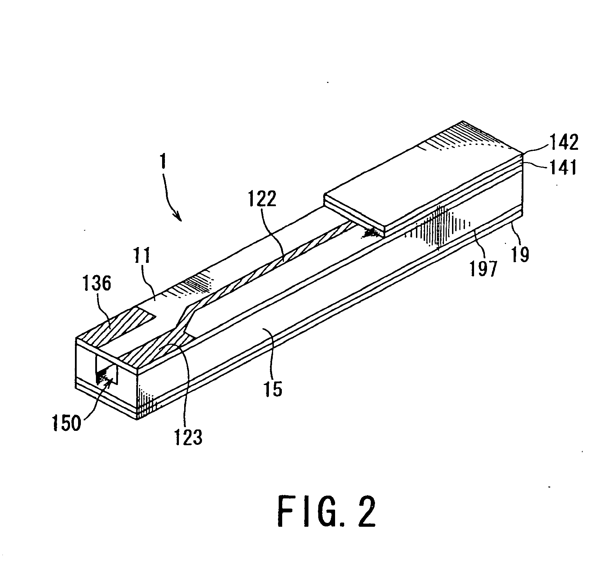

Referring to Figs. 1 to 6, a gas-sensing device 1 according to an embodiment will now be described. The gas-sensing device 1 manufactured in the embodiment is shown in Figs. 1 to 3.

The gas-sensing device 1 is provided with a solid electrolyte plate 11 made from partially stabilized zirconia. A measurement electrode 121 is disposed on a first surface (i.e., an upper surface in Fig. 1) of the solid electrolyte plate 11 so as to be exposed to the atmosphere of a gas to be measured. A reference electrode 131 is disposed on a second surface (i.e., a lower surface in Fig. 1) of the solid electrolyte plate 11 so as to be exposed to the atmosphere of a reference gas. On the first surface of the solid electrolyte plate, a gas-permeable diffusion layer 141 is laminated to cover the measurement electrode 121. In addition, a gas-non-permeable shield layer 142 is laminated on the diffusion layer 141.

The shield layer 142 is made from a material that differs in a contraction percentage from the solid electrolyte plate 11 by an amount of 0.3 % or less. The shield layer 142 is also made from partially stabilized zirconia that has the same composition as that of the solid electrolyte plate 11.

On the other hand, on the second surface of the solid electrolyte plate 11 is disposed a reference-gas-chamber forming plate 15 to form a reference gas chamber to face the reference electrode 131.

The gas-sensing device 1 is subjected to a cooling step of 1470 °C to 457 °C carried out after a calcination step of components that have been fabricated.

The foregoing gas-sensing device 1 will now be detailed. This gas-sensing device 1 is used as a device to be incorporated into a gas sensor installed at the exhaust system of an automobile engine. The gas-sensing sensor is in charge of measuring a density of oxygen in the exhaust gas. Based on measurements, an air-fuel ratio of the engine is detected to control the combustion in the engine.

As shown in Figs. 1 to 3, in this embodiment, the gas-sensing device 1 includes the reference-gas-chamber forming plate 15, solid electrolyte plate 11, diffusion layer 141, and shield layer 142, which are overlaid one on another in this order.

The reference-gas-chamber forming plate 15 is shaped to have a groove 150 that is rectangular in section. The groove 150 provides a reference gas chamber into which a reference gas is introduced.

The solid electrolyte plate 11 accepts both the measurement electrode 121 and the reference electrode 131 on its surfaces. Each of the electrodes 121 and 122 is connected to each of electric leads 122 and 132.

The diffusion layer 141 is overlaid on the solid electrolyte plate 11 so as to cover the measurement electrode 121, and the shield layer is further overlaid on the diffusion layer 141.

Further, the gas-sensing device 1 is integrally equipped with a ceramic heater 19 arranged on a side of the reference-gas-chamber forming plate 15 which is opposite to the solid electrolyte plate 11.

The ceramic heater 19 includes a heater sheet 191, heating element 181 placed on the a heating element 181, leads 182 to supply current to the heating element 181, and two heater insulating plates 195 and 197 inserted so as to cover the heating element 181.

One of the heater insulating plates 195 and 197, that is, the plate 195 has a window 196, which is the same in the shape as that of the heating element 181 and the leads 182. Hence both the heating element 181 and the leads 182 can be embedded into the window 196. The window 196 is placed to smoothen irregularities arising when both the heating element 181 and leads 182 are placed between the heater sheet 191 and the heater insulating plate 197.

The leads 182 are electrically connected with terminals 183 via conductive through holes 190 formed through the heater sheet 191.

Adhesive layers 161, 162 and 165 are placed between the heater insulating plate 197 and the reference-gas-chamber forming plate 15, between reference-gas-chamber forming plate 15 and the solid electrolyte plate 11, and between the diffusion layer 141 and the shield layer 142, respectively. Moreover, two further adhesive layers 163 and 164 are inserted into between the solid electrolyte plate 11 and the diffusion layer 141.

In the present embodiment, all the reference-gas-chamber forming plate 15, diffusion layer 141, heater sheet 191, heater insulating plates 195 and 197, insulation layer 163, and adhesive layers 161, 162, 164 and 165 are made from alumina.

The composition of each member is as follows.

The reference-gas-chamber forming plate 15 and heater sheet 191 are made from alumina containing zirconia by 2 %. The diffusion layer 141, heater insulating plates 195 and 197, and adhesive layers 161, 162, 164 and 165 are made from alumina of which purity is 99.9 % or more. The insulation layer 163 is made from alumina of a purity of 99.9 % or more, with both of a 500 ppm of zirconia and a 300 ppm of magnesia added thereto. The diffusion layer 141 is made from alumina whose porosity is 14 %. On the other hand, each of the solid electrolyte plate 11 and the shield layer 142 is made of partially stabilized zirconia produced by adding a 6 mol percent of yttria to zirconia.

On the second surface of the solid electrolyte plate 11, the reference electrode 131 is placed so as to face the groove 150 serving as a reference gas chamber. A window 139 is formed at a particular position of the foregoing adhesive layer 162 so as to make the window 139 face the reference electrode 131 through the layer 162. The reference electrode 131 is electrically coupled with a terminal 136 via a lead 132, inner terminal 133, conductive through hole 134 formed through the solid electrolyte plate 11, and a through hole 135 formed through the insulation layer 163. The reference electrode 131, lead 132 and inner terminal 133 are formed as a mono-layer. As a result, the terminal 136 is placed on the insulation layer 163 formed on the first surface of the plate 11.

On the other hand, another window 128 is formed at a particular position of the insulation layer 163 so as to make the window 128 face the measurement electrode 121. Similarly, another window 129 is formed at a particular position of the adhesive layer 164 so that the window 129 is able to face the measurement electrode 121. The measurement electrode 121 on the insulation layer 163 is electrically connected to a terminal 123 via a lead 122, where all these components 121, 122 and 123 are produced as a one layer.

The gas-sensing element 1 is able to supply its output signal from the terminals 123 and 136.

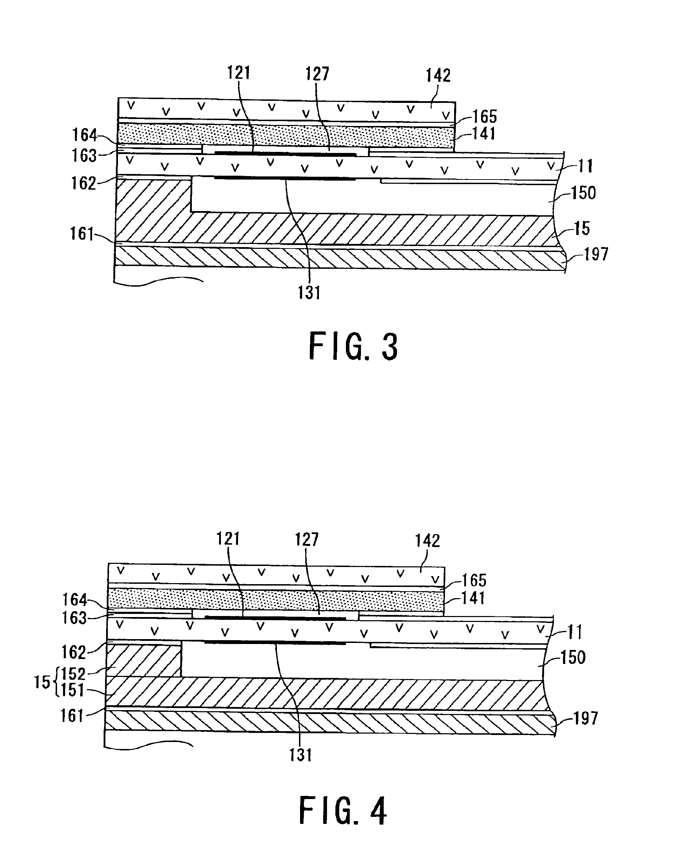

As shown in Fig. 3, both of the insulation layer 163 and the adhesive layer 164 are laminated one on the other so that their windows 128 and 129 communicate to earth other. This lamination produces an areole 127 in which the measurement electrode 121 is incorporated. A gas to be measured is introduced into the areole 127 through the diffusion layer 141.

The manufacturing method of the gas-sensing device 1 according to the present embodiment will now be explained briefly.

A green sheet for the solid electrolyte plate 11 is first produced using a doctor blade technique or an extrusion technique. Printing sections for forming the measurement electrode 121, reference electrode 131, lead 132, and inner terminal 133 are then arranged on the green sheet. The through hole 134 has already been previously formed through this green sheet.

An un-calcinated forming body for the reference-gas-chamber forming plate 15 is formed through injection molding, cutting molding, press molding, bonding molding, or others.

Additionally, green sheets for the heater sheet 191, shield layer 142, diffusion layer 141 are produced using a doctor blade technique, an extrusion technique, or others. Of these components, the shield and diffusion layer 142 and 141 may be produced using paste.

Further, the green sheet for the heater sheet 191 is previously formed with printing sections for the heating element 181 and others, as well as the through holes 190.

The foregoing adhesive layers 161, 162, 164 and 165 and the insulation layer 163 are formed on the green sheets by printing adhesive and insulating paste thereon, respectively. Of these layers, the layers 164, 162 and 163 with the windows129, 139 and 128 are formed by screen printing with paste. The heater insulating plates 195 and 197 are also produced by screen printing with paste.

The paste for the insulation layer 163 is first applied to the green sheet for the solid electrolyte plate 11, and then the printing sections for the measurement electrode 121, lead 122, and terminals 136 and 123 are formed on the applied layered paste.

In cases where at least one of the shield layer 142 and the diffusion layer 141 is formed with the paste, the adhesive layer 165 can be omitted. Moreover, the diffusion layer 141 can be put, as a single member, on the adhesive layer 164, if the diffusion layer 141 is produced using the paste.

The green sheets that have been prepared as above were laminated in the order shown in Fig. 1, and then pressed, with the result that the adhesion properties of the adhesive layers 161, 162, 164 and 165 caused the green sheets to adhere one on another. Hence an un-calcinated lamination member was produced. This member was then subjected to heating up to 1470 °C for calcination.

The calcinated lamination member was then cooled down to the room temperature, whereby the gas-sensing device 1 according to the present embodiment was manufactured.

The performance and advantages of the gas-sensing device 1 will now be described.

As explained above, after production of the un-calcinated lamination member, this member undergoes the calcination, before being cooled down to the room temperature.

Since it is considered that stresses be generated among the shield layer 142, diffusion layer 141, and solid electrolyte layer 11 during the cooling step, such stresses can be analyzed from a quantitative viewpoint.

Provided that the shield layer 142 has factors of a Young's modulus E1, linear expansion coefficient $\alpha1$, and thickness t1; the diffusion layer 141 has factors of a Young's modulus E2, linear expansion coefficient $\alpha2$, and thickness

t2; and the solid electrolyte plate 11 has factors of a Young's modulus E3, linear expansion coefficient $\alpha 3$, and thickness t3, a stress $\sigma i$ to be caused in each layer is given by:

$$\sigma i = -Ei \cdot \Delta\alpha i \cdot \Delta Ti$$

in which i=1 to 3, $\Delta\alpha$ is a difference between the linear expansion coefficients, and $\Delta T$ is a change in temperature.

If the cooling step is conducted to impose a negative $\Delta T$ on the calcinated lamination member and its layers and plate have larger linear expansion coefficients, pulling stresses $\sigma 1$ to $\sigma 3$ are to be caused in the individual layers and plate.

If any external forces act on the member, the forces due to the pulling stresses will be balanced, whereby an expression of

$$b(\sigma 1 \cdot t1 + \sigma 2 \cdot t2 + \sigma 3 \cdot t3) = 0$$

is given, wherein b denotes a width of each layer (plate).

Hence, the expression can be changed to

$$\sigma 3 = -(1/t3)(\sigma 1 \cdot t1 + \sigma 2 \cdot t2).$$

In manufacturing the gas-sensing device 1 according to the present embodiment, the linear expansion coefficient of the partially stabilized zirconia is 10.6 ppm in the temperature range from 1500 °C to 450 °C, while that of the alumina is 8 ppm in the temperature range from 1500 °C to 450 °C.

Hence if the shield layer 142 is made from alumina, the relationships of $\sigma 1 < 0$, $\sigma 2 < 0$, and $\sigma 3 > 0$ are established. However, the shield layer 142 of the gas-sensing device 1 according to the present embodiment has been made from the partially stabilized zirconia, the relationships of $\sigma 1 > 0$, $\sigma 2 < 0$, and $\sigma 3 > 0$ are established.

Thus, producing the shield layer 142 from the partially stabilized zirconia makes it possible to reduce $\sigma 3$ more deeply than the case that the shield layer 142 is made from alumina.

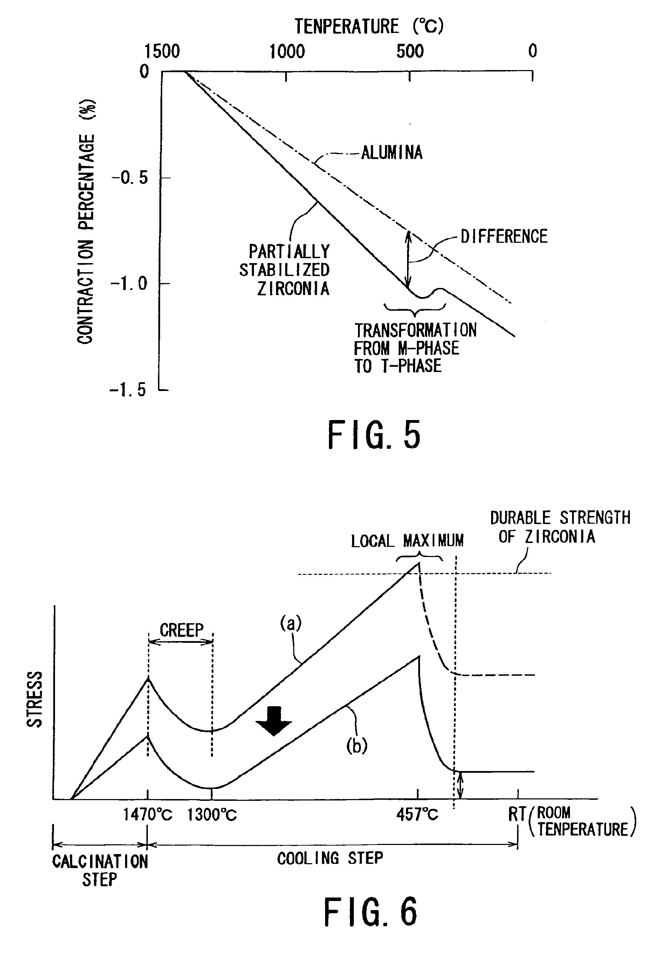

The solid electrolyte plate 11 is composed of the partially stabilized zirconia. Since the partially stabilized zirconia changes the phases from its M-phase (monoclinic phase) to its T-phase (tetragonal phase) at a temperature of 457 °C, in cases where the partially stabilized zirconia is cooled down from a higher temperature (about 1500 °C). At this temperature of 457 °C, as shown in Fig. 5, a slope of the contraction percentage changes.

In the gas-sensing device 1 according to the present embodiment, the remaining components other than both the solid electrolyte plate 11 and the shield layer 142 are made from alumina. The alumina changes its contraction percentage depending on a decrease in temperature, but the slope of its changes is almost constant, as shown in Fig. 5.

A difference of the contraction percentages between the alumina and the partially stabilized zirconia becomes a maximum at a temperature of approximately 457 °C, at which the partially stabilized zirconia transforms from the M-phase to the T-phase.

A stress applying from the solid electrolyte plate 11 to the shield layer 142 increases continuously during a period of step for calcinating the un-calcinated lamination member, as shown in Fig. 6. In Fig. 6, a curve (a) shows the characteristics of such stress caused in the conventional type of device in which the shield layer is made from alumina, whilst a curve (b) shows that of such stress caused in the device according to the present embodiment.

As shown in Fig. 6, a cooling step follows the calcination step that finishes at a temperature of some 1470 °C. As soon as the temperature begins to decrease, the stress also decreases sharply. The reason is that creep strains are caused in all components including the solid electrolyte plate 11 and the shield layer 142 due to the fact that the temperature was high at the end of the calcination step.

After the sharp decrease, as shown in Fig. 6, the stress applying from the solid electrolyte plate 11 to the shield layer 142 turns over at a temperature of about 1300 °C, and begins to increase depending on a rise in the temperature, up to a local maximum at a temperature of about 457 °C. This is attributable to the fact that the difference of the contraction percentages between the alumina and the partially stabilized zirconia becomes a maximum at the temperature of about 457 °C.

If the shield layer 142 were made from the alumina, breakage or cracks would be caused in the solid electrolyte plate 11, because a stress generated at the point of the local maximum exceeds in strength a sustainable strength of the partially stabilized zirconia (refer to the curve (a) shown in Fig. 6).

In contrast, in the present embodiment, as shown by the curve (b) in Fig. 6, the stress applying from the solid electrolyte plate 11 to the shield layer 142 can be suppressed to lower levels as a whole. Significantly, when the stress reaches its local maximum at a temperature of 457 °C, the strength of the stress is still below the sustainable strength of the partially stabilized zirconia. Therefore, the solid electrolyte plate 11 is able to have a higher resistance to breakage and cracks, thus preventing the product from being defective due to such an excessive stress. A verification that the defective fraction decrease thanks to the present invention will be described later.

As stated above, the present embodiment provides the gas-sensing device that is firmly resistant to defectiveness attributable to breakage or cracks caused in the solid electrolyte plate.

The reference-gas-chamber forming plate 15 is not limited to a single body. A modification of such plate 15 can be provided as shown in Fig. 5, in which the forming plate 15 is composed by a laminated member consisting of a base plate 151 and a top plate 152 with a hole for a chamber. When laminated one on the other, the hole of the top plate 152 is able to provide a reference gas chamber 150, thus providing the same performance and advantages.

(Experiments)

Two types of experiments, which were conducted to confirm the advantages of the present invention, will now be described.

One type of experiment was carried out on condition that the gas-sending device 1 had the solid electrolyte plate 11 produced as in the above embodiment and the shield layer 142 made from the partially stabilized zirconia. A maximum stress caused in each of the components of such gas-sensing device 1, which occurs during the cooling step, was calculated.

For calculation, specimens 1 to 4 and comparative specimens C1 and C2, which have the same structure as that shown in Fig. 3 or 4 in the embodiment, were prepared. A table 1 is a list to show types of compositions of the components of each specimen. The components include the solid electrolyte plate 11, shield layer 142, and others. The types of compositions include alumina or partially stabilized zirconia (which is simply noted as "zirconia,").

Table 1

| | SPECIMEN 1 | SPECIMEN 2 | SPECIMEN 3 | SPECIMEN 4 | COMPARATIVE SPECIMEN 1 | COMPARATIVE SPECIMEN 2 |
|---|---|---|---|---|---|---|
| SHIELD LAYER 142 | ZIRCONIA | ALUMINA | ZIRCONIA | ZIRCONIA | ALUMINA | ALUMINA |
| ADHESIVE LAYER 165 | ALUMINA | ALUMINA | ALUMINA | ZIRCONIA | ALUMINA | ZIRCONIA |
| DIFFUSION LAYER 141 | ALUMINA | ALUMINA | ZIRCONIA | ZIRCONIA | ALUMINA | ALUMINA |
| ADHESIVE LAYER 164 | ALUMINA | ALUMINA | ALUMINA | ZIRCONIA | ALUMINA | ALUMINA |
| INSULATION LAYER 163 | ALUMINA | ALUMINA | ALUMINA | ALUMINA | ALUMINA | ALUMINA |
| SOLID ELECTROLYTE PLATE 11 | ZIRCONIA | ZIRCONIA | ZIRCONIA | ZIRCONIA | ZIRCONIA | ZIRCONIA |
| ADHESIVE LAYER 162 | ALUMINA | ALUMINA | ALUMINA | ZIRCONIA | ALUMINA | ALUMINA |
| REFERENCE-GAS-CHAMBER PLATE 15 | ALUMINA | | | ZIRCONIA | | ALUMINA |
| FORMING PLATE 151 | | ALUMINA | ALUMINA | | ALUMINA | |
| FORMING PLATE 152 | | ZIRCONIA + ALUMINA | ZIRCONIA | | ALUMINA | |
| ADHESIVE LAYER 161 | ALUMINA | ALUMINA | ALUMINA | ZIRCONIA | ALUMINA | |
| STRUCTURE | FIG. 3 | FIG. 4 | FIG. 4 | FIG. 3 | FIG. 4 | FIG. 3 |

Notes: In this table, "ZIRCONIA" means "partially stabilized zirconia."

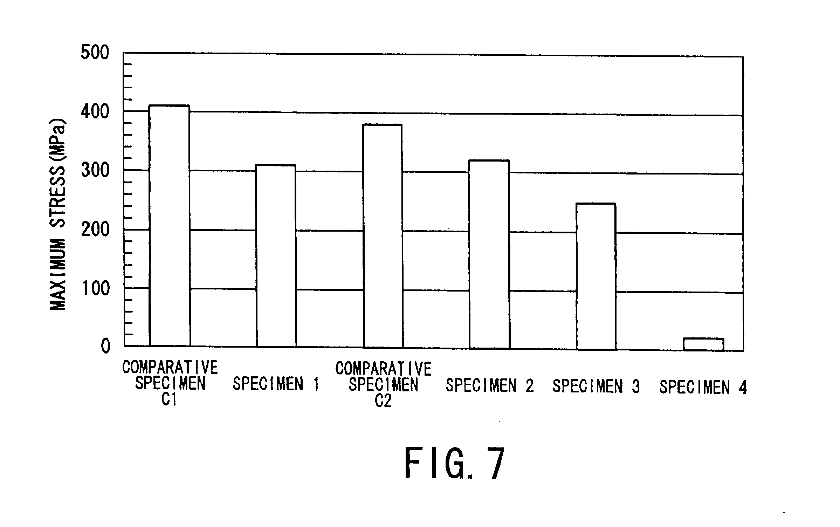

A finite element method was used to calculate a maximum stress to be caused in each of the above specimens, and their calculated results were expressed as a graph in Fig. 7.

From the graph in Fig. 7, it is understood that, when one or more of the shield layer, diffusion layer, and reference-gas-chamber forming plate is made from the partially stabilized zirconia which is the same as the solid electrolyte plate, their maximum stresses to be caused can be reduced. Thus, the solid electrolyte plate is able to have higher resistance to its breakage or cracks.

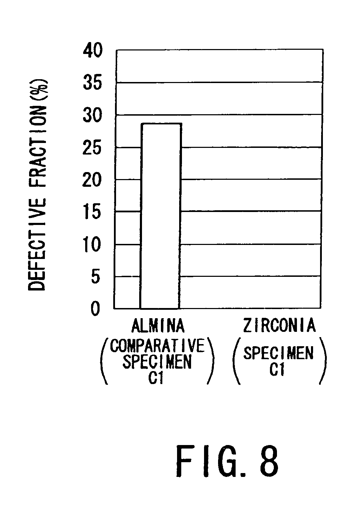

The other experiment was carried out in such a manner that a large number of gas-sensing devices (specimen 1) each using the partially stabilized zirconia according to the present invention and a large number of conventional gas-sensing devices (comparative specimen C1) were produced, and a defective fraction was examined every type of specimens. The examination was carried out through an ultra-insulation test to determine if the devices is defective or not. A defective fraction was then figured out, every type of specimens. The results are shown in Fig. 8.

As understood from Fig. 8, the gas-sensing devices (specimens 1) produced in compliance with the above embodiment show a defective fraction of zero. In contrast, the gas-sensing devices (comparative specimens C1) show an extremely high defective fraction of slightly lower than 30 %. The failure in manufacturing gas-sensing devices can therefore be lessened if the above embodiment is applied to them. Accordingly, a yield ratio can be raised and a production cost can be lowered.

The present invention may be embodied in several other forms without departing from the spirit thereof. The present embodiments as described is therefore intended to be only illustrative and not restrictive, since the scope of the invention is defined by the appended claims rather than by the description preceding them. All changes that fall within the metes and bounds of the claims, or equivalents of such metes and bounds, are therefore intended to be embraced by the claims.

## Claims

1. A gas-sensing device (1), which is subjected to a cooling step from 1470 °C to 457 °C after calcinating the gas-sensing device during production thereof, **characterized in that** the gas-sensing device comprises:

   a solid electrolyte plate (11) made of partially stabilized zirconia;
   a measurement electrode (121) disposed on a first surface of the solid electrolyte plate so as to face an atmosphere of a gas to be measured;
   a reference electrode (131) disposed on a second surface of the solid electrolyte plate so as to face an atmosphere of a reference gas ;
   a gas-permeable diffusion layer (141) laminated on the first surface of the solid electrolyte plate so as to cover the measurement electrode;
   a gas-non-permeable shield layer (142) laminated on the diffusion layer; and
   a reference-gas-chamber forming plate (15) laminated on the second surface of the solid electrolyte plate so as to form a reference gas chamber to face the reference electrode,

   wherein at least one of the shield layer, the diffusion layer, and the reference-gas-chamber forming plate is made from a material that differs in a contraction percentage from the solid electrolyte plate by an amount of 0.3 % or less.

2. The gas-sensing device of claim 1, **characterized in that** at least one of the shield layer, the diffusion layer, and the reference-gas-chamber forming plate is made of a material that differs in a contraction percentage from the solid electrolyte plate by an amount of 0.1 % or less.

3. The gas-sensing device of claim 1 or 2, **characterized in that** at least one of the shield layer, the diffusion layer, and the reference-gas-chamber forming plate is made of partially stabilized zirconia.

4. The gas-sensing device of any one of claims 1 to 3, **characterized in that** the shield layer is made of partially stabilized zirconia and coated with alumina-related insulation layer.

1 GAS-SENCING DEVICE

142 SHIELD LAYER

165

141 DIFFUSION LAYER

164

129

121 MEASUREMENT ELECTRODE — 123

122 — 136

128 — 163

135

11 SOLID ELECTROLYTE PLATE

134

131 REFERENCE ELECTRODE — 133

132

139 — 162

150 — 15 REFERENCE-GAS-CHAMBER FORMING PLATE

161

197

195

196

19

181   191   182   183

190

FIG. 1

FIG. 2

121    127         142

164
163        165
          141

162
161        11
          150
          15
          197

131

# FIG. 3

121    127         142

164
163        165
          141

162
15 {152
   151      11
161        150

131        197

# FIG. 4

TENPERATURE (°C)

1500    1000    500    0

CONTRACTION PERCENTAGE (%)

—ALUMINA

DIFFERENCE

PARTIALLY
STABILIZED
ZIRCONIA

TRANSFORMATION
FROM M-PHASE
TO T-PHASE

# FIG. 5

DURABLE STRENGTH
OF ZIRCONIA

LOCAL MAXIMUM

STRESS

CREEP

(a)

(b)

1470°C  1300°C    457°C    RT (ROOM TENPERATURE)

CALCINATION
STEP

COOLING STEP

# FIG. 6

FIG. 7

FIG. 8